# EUROPEAN PATENT APPLICATION

(11) **EP 2 950 251 A1**
(43) Date of publication of application: **02.12.2015**
(21) Application number: 14425115.4
(22) Date of filing: 17.09.2014
(51) Int. Cl.: G06Q 10/10, G06Q 40/08, G07C 5/00, H04N 7/18, H04W 4/02, H04W 4/04

(54) **Method, apparatus and system for filling out an accident report form**

(30) Priority: 30.05.2014 EP 14425064; 30.05.2014 EP 14425065
(71) Applicant: Octocam S.r.l., 00173 Roma (RM) (IT)
(72) Inventor: Mungo, Andrea, I-16031 Pieve Ligure (GE) (IT)
(74) Representative: Ferroni, Filippo

(57) **Abstract**

The present invention relates to an apparatus (2,2a,2a'), a system (1), and a method for filling out an electronic accident report document following a road accident occurred between vehicles (V), wherein said apparatus (2,2a,2a') comprises acquisition means (211,211a,221b,212,218) adapted to acquire information relating to the road accident in an assisted manner, processing means (215) configured for entering and/or attaching at least a part of said information into/to the electronic accident report document, and transmission means (220) that can transmit the electronic accident report document to processing means (10).

## Description

The present invention relates to a method, an apparatus and a system for filling out an accident report form.

As is known, organizations accountable for paying compensation for damages caused by road accidents, e.g. insurance companies, provide a service to people who have suffered damages from a road accident. De facto, such organizations provide a service to the community, because they minimize the effects of damages suffered by a relatively low number of individuals by exploiting an economic base built up by using the insurance premiums paid by all insured parties.

The service offered by these organizations operates satisfactorily until the amount of indemnities to be paid and the incomes deriving from insurance premiums remains under a threshold value; when the value of this ratio exceeds said threshold value, it becomes necessary, in order to be able to properly manage the risk taken by the insurance company, to increase the economic base by raising insurance premiums and/or taxes, so as to cause the value of said ratio to return below the threshold value.

As is known, some compensation requests made to organizations accountable for paying compensation for damages caused by road accidents are however fraudulent, i.e. based on feigned road accidents.

Such frauds rely on the fact that it is difficult and/or even impossible, in some circumstances, to ascertain if the damages suffered by the party that has requested a compensation have actually been caused by the road accident described in the compensation request, since it is not possible to reconstruct the dynamics of the road accident.

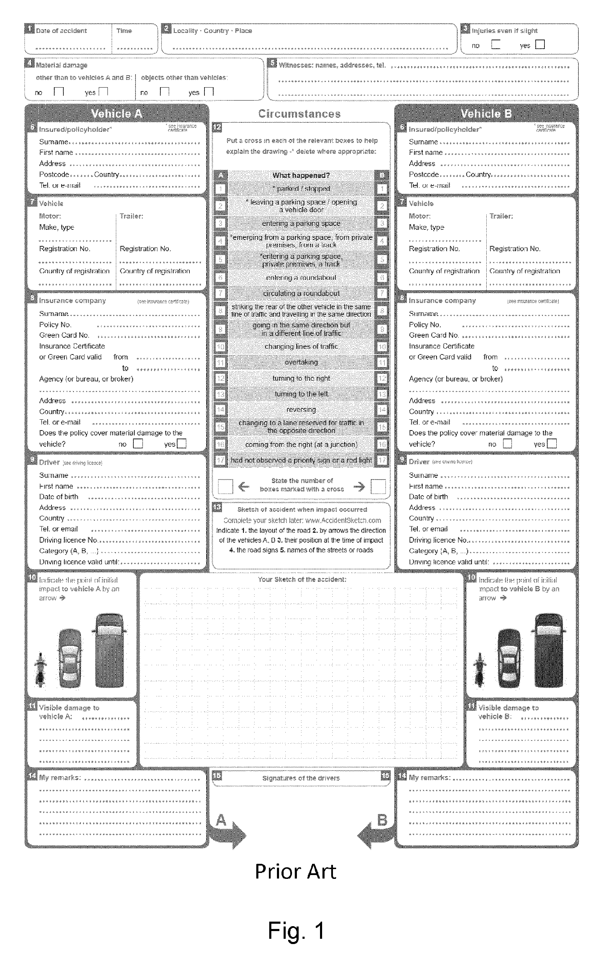

The compensation request is typically made by means of a pre-printed form, i.e. the so-called Accident Report Form, like the one shown in Fig. 1, which is often the only document that can be objectively verified by the organization accountable for paying compensation for damages.

It should be noted that this form is always filled out after a road accident, and therefore it may be written by slightly shocked people; it follows that there is a high probability that wrong information will be entered by individuals in such conditions.

Moreover, a person in an altered state may likely miss some details, e.g. that the other party has no insurance certificate or has a roughly falsified one (e.g. by making a copy with changed data), that there is no correspondence between the vehicle identification number and the number plate, that the other party's name is not the one stated in the documents, or the like.

In addition, the reconstruction of the dynamics of the road accident is usually made on the basis of the picture drawn on the accident report form (see box 13 in Fig. 1) by one of the parties involved in the accident, and also of information collected after the accident, if any. It is thus possible to create a false road accident (i.e. feigned by both parties) or an intentional road accident (i.e. intentionally caused by one of the involved parties). This latter category (intentional accidents) typically includes accidents (e.g. rear-ending) that should cause physical damage to the driver (e.g. whiplash injury), for which the organization accountable for paying compensation for the suffered damage will have to pay a considerable indemnity. As aforementioned, this kind of fraud is based on the fact that it is not possible to verify, via the accident report form, if the road accident was sufficiently serious to cause the physical damages for which one of the involved parties is claiming compensation, possibly even after some time has passed.

The basic technical problem tackled by the invention is therefore to provide a method for reducing the probability that an organization accountable for paying compensation for damages caused by road accidents will be swindled.

The idea at the basis of the present invention is to enter into and/or attach to the accident report form data acquired in an electronically assisted manner.

This reduces the risk that the organization accountable for paying compensation for damages caused by road accidents will be swindled, because the correctness of the information entered into the accident report form is improved.

The invention also comprises a system for implementing the method and an apparatus included in said system, the features of which are also set out in the appended claims.

Such features as well as further advantages of the present invention will become more apparent from the following description of a preferred example of embodiment thereof as shown in the annexed drawings, which are supplied by way of non-limiting example, wherein:
- Fig. 1 shows an accident report form according to the prior art;
- Fig. 2 is a schematic view of a system for filling out accident report forms according to the invention;
- Fig. 3 is a block diagram of an electronic computer included in the system of Fig. 2;
- Fig. 4 is a front view of a first embodiment of a mobile apparatus included in the system according to the invention;
- Fig. 5 illustrates a mode of operation of the mobile apparatus of Fig. 4;
- Fig. 6 illustrates a first mode of operation of the system of Fig. 2;
- Fig. 7 illustrates a second mode of operation of the system of Fig. 2;
- Fig. 8 is a front view of a second embodiment of a vehicular mobile apparatus included in the road safety system according to the invention;
- Fig. 9 is a rear view of the apparatus of Fig. 10;
- Fig. 10 is a block diagram that shows the parts comprised in the apparatus of Figs. 5 and 6;
- Fig. 11 is a flow chart that shows a preferred mode of operation of the vehicular mobile apparatus of Figs. 5 and 6;
- Fig. 12 is a block diagram of a first variant of the apparatus of Figs. 5 and 6.

Prior to describing in detail what is shown in the drawings, it is worth making clear that any reference to "an embodiment" in this description will indicate that a particular configuration, structure or feature described in regard to the embodiment is comprised in at least one embodiment. Therefore, the phrase "in an embodiment" and other similar phrases, which may be present in different parts of this description, will not necessarily be all related to the same embodiment. Furthermore, any particular configuration, structure or feature may be combined in one or more embodiments in any way deemed appropriate. The references below are therefore used only for simplicity's sake, and do not limit the protection scope or extension of the various embodiments.

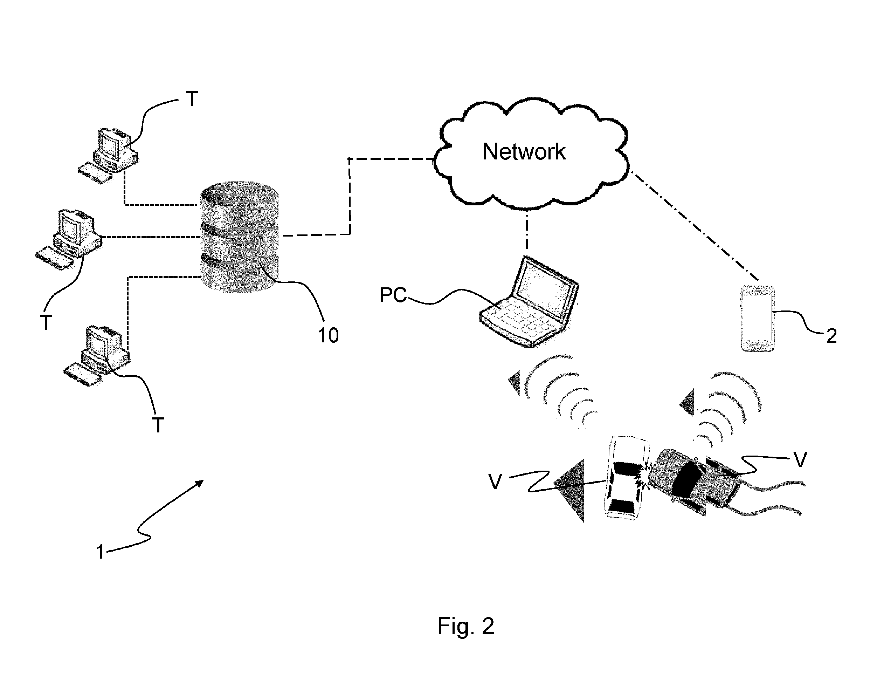

A system for filling out an accident report form according to the invention, designated as a whole by 1 in Fig. 2, comprises a portable apparatus 2, of the electronic type, to be arranged in at least one vehicle V, preferably in a position suitable for capturing images, i.e. on the front dashboard or on the windscreen: for this purpose, the apparatus may be associated with a support suitable for holding it firmly in position, which support is not shown in the drawings because it is per se known.

Let us think, for example, of a bracket fitted with fixing means, such as a clamp or a sucker, depending on whether it is to be applied to the dashboard or to the windscreen.

The apparatus 2 is also adapted to acquire information about its conditions during a road accident.

Such information comprises at least two different types of data: video-audio data, corresponding to the images and sounds captured by the apparatus 2, and telemetric data, corresponding to the speed and/or acceleration of the vehicle V whereon it has been installed; in accordance with one possible embodiment of the invention, the data relating to speed and acceleration refer to different orthogonal axes, thus providing more complete information about the conditions of the vehicle V during a road accident.

Preferably, the mobile apparatus 2 can also provide and transmit geolocation data; such data are typically those available for satellite navigation and comprise, among others, the geographical coordinates of the position of the apparatus 2 and of the vehicle V whereon it has been installed.

The mobile apparatus 2 can also transmit this information to processing means 10 via one or more communications networks, schematically represented in Fig. 2 as a cloud, such as, for example, a telephone network, the Internet and/or a dedicated network; the apparatus 2 is also adapted to be connected, whether via cable or electromagnetic waves (e.g. radio waves using the so-called Bluetooth® protocol, or optical waves, infrared waves, etc.), to an electronic computer PC (Personal Computer) for personal or private use. This increases the amount of information that can be attached to and/or entered into the accident report form, thus reducing the probability that the organization accountable for paying compensation for damages will be cheated.

The method of the invention for filling out an accident report form after a road accident is implemented in the above-described system 1 and comprises the steps of:
- acquiring, through data acquisition means (such as, for example, those of the mobile apparatus 2 and/or of the electronic computer PC, which will be further described below), information about vehicles and/or drivers of said vehicles involved in the road accident, wherein said information is acquired in an assisted manner and preferably includes data detected during the road accident;
- entering and/or attaching at least a part of said information, acquired in an assisted manner during the acquisition step, into/to the accident report form through processing means (such as, for example, those of the mobile apparatus 2 and/or of the electronic computer PC, which will be further described below);
- transmitting the accident report form, along with the information acquired in an assisted manner and/or including data detected during the road accident, to the processing means 10 through transmission means (such as, for example, those of the mobile apparatus 2 and/or of the electronic computer, which will be further described below).

Assisted information acquisition refers herein to the acquisition of information preferably via an interface that guides the person involved during the data entry process, by prompting him/her to enter the names of the people involved and the vehicles' number plates, select the accident position, select the types of vehicles (e.g. by providing closed questions or otherwise). This improves the correctness of the information entered into the accident report form (also referred to as "document").

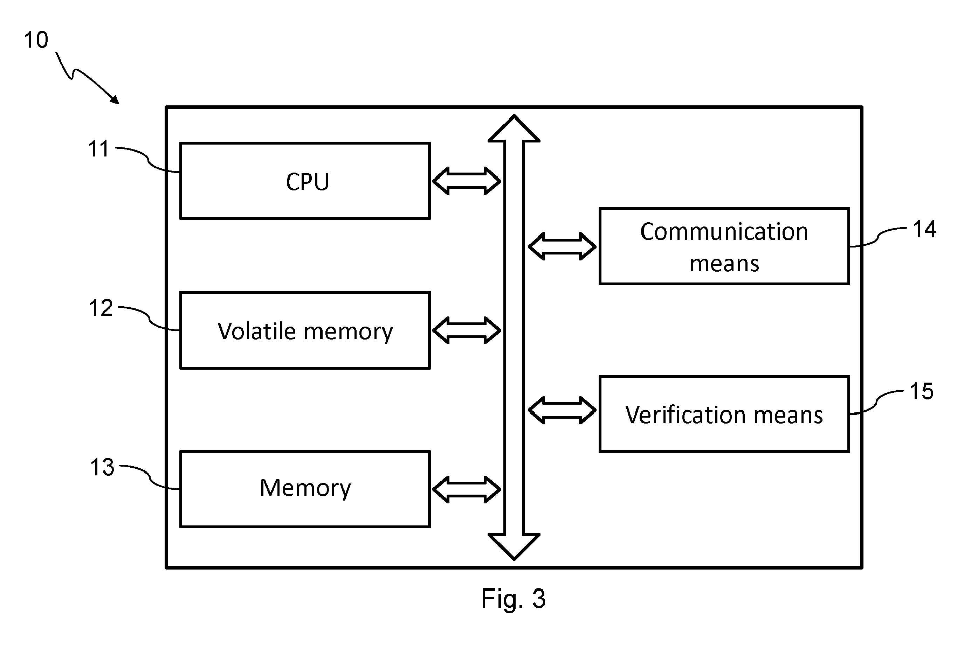

With reference to Fig. 3, the processing means 10 consist of a server apparatus, which may be more or less complex depending on the number of apparatuses 2 to be handled and on the complexity of the associated network.

The processing means 10 may be arranged remotely from the apparatuses, e.g. in a suitable data processing centre, preferably managed by an organization that pays compensation for damages caused by road accidents, and are advantageously accessible to authorized parties via a set of computer terminals T.

The processing means comprise, among other things, the following components:
- a central processing unit (CPU) 11;
- a volatile memory 12, e.g. RAM memory, for loading the instructions that the central processing unit 11 will have to execute;
- a mass memory 13, e.g. one or more mechanical or solid hard disks, for storing the instructions/data that must be transferred into the volatile memory 12 and then executed/processed by the CPU 11, as well as the information transmitted by the electronic apparatus(es);
- communication means 14, e.g. an Ethernet and/or WiFi interface or the like, allowing the processing means 10 to gain access to the computer network and to receive, via said network, the information transmitted by the electronic apparatus(es).

This system also comprises verification means that can verify the authenticity of the information acquired by the electronic apparatus(es) and transmitted to the processing means 1, preferably along with the completed accident report form, so as to reduce the probability that the organization accountable for paying compensation for damages caused by a road accident will suffer a fraud, because it can be verified whether the information acquired by said electronic apparatuses have been purposefully generated in order to put on an accident or not.

In the embodiment of the system according to the invention shown in Fig. 3, the processing means 10 comprise verification means 15, which in turn comprise hardware and/or software (loaded into the memory 13) that can verify the authenticity of the information received from said apparatuses.

If the information acquired by one of the electronic apparatuses and sent along with the accident report form comprises a video stream (e.g. compressed in accordance with the MPEG standard or the like) included in a file, a method for verifying the authenticity of the information comprises the following steps:
a. calculating, for each one of the frames comprised in said video stream, summary data (such as, for example, the mean, maximum, minimum, median, etc. values) on the basis of the luminance values of the pixels that compose each frame;
b. comparing the summary data obtained during step a. with typical values associated with a certain type of apparatus.

Tests carried out by the Applicant have shown that a particularly effective way to verify the authenticity of a video stream generated by reading a file compressed in accordance with the MPEG standard is to compare the mean luminance value of each frame with a typical luminance value associated with a particular type of apparatus that is supposed to have generated that file, wherein the type of apparatus can be determined, for example, by reading the appropriate field in the metadata of said file. In this manner, one can establish whether the file has been generated by a particular type of apparatus or not, thereby making it possible to evaluate the authenticity of the video stream contained in the file.

In accordance with a preferred embodiment of the invention, the data about the video images and/or the audio captured by the apparatus 2 and/or the telemetric and/or geolocation data detected by the mobile apparatus 2 during the accident are compared with the data entered into the accident report form by the parties involved in the accident, so as to reduce the probability that the organization accountable for paying compensation for damages caused by the road accident will suffer a fraud.

As an alternative to or in combination with the above, the data relating to the video images and/or audio captured by the apparatus 2 are compared with at least one of the telemetric data and the geolocation data provided by the same apparatus.

In this way it is possible to verify the coherence between the images of an accident, the place where it occurred, and the consequences it had on the vehicle, so as to further reduce the probability that the organization accountable for paying compensation for damages caused by the road accident will suffer a fraud.

In this context, it must be pointed out that all the data provided by the apparatus are correlated to the time of the internal clock of the apparatus 20.

Thus, for example, if an accident occurs at 12:00 a.m. and involves the vehicle V whereon the apparatus 2 has been installed, the audio-video data, the telemetric data, such as the speed and acceleration of the vehicle V, and the positioning data recorded during the accident (latitude and longitude) will be entered into and/or attached to the accident report form filled out by the parties involved in the accident, through the processing means of said apparatus 2; then the transmission means of the apparatus 2 will transmit the completed accident report form and the data detected during the accident to the processing means 10, which are equipped with algorithms that will evaluate the coherence and establish the trustworthiness of the acquired data.

Furthermore, if after the impact caused by the accident shown in the images no coherent variations in the speed and/or acceleration of the vehicle V are found, the processing means 10 will signal an anomaly indicating a high risk of fraud for the insurance company. Such a signalling could mean, in fact, that the images do not comply with the physical parameters of the vehicle, and might therefore have been altered in order to cheat the insurance company.

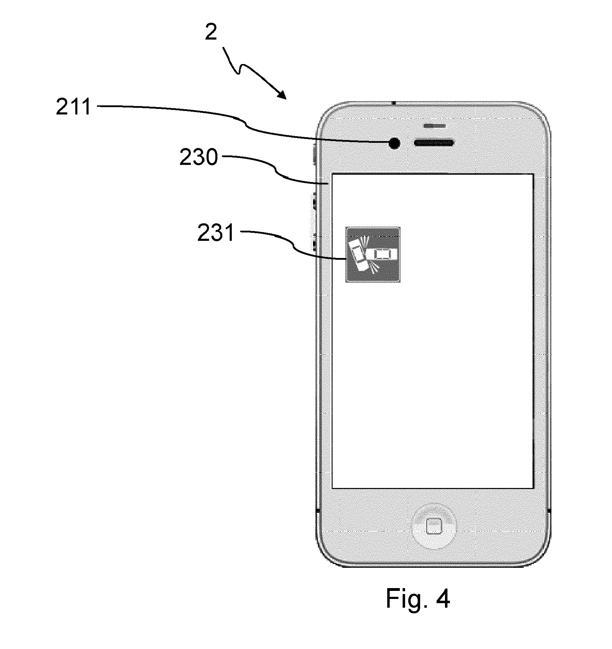

Also with reference to Fig. 4, in a preferred embodiment the system 1 according to the invention comprises a mobile apparatus 2 consisting of a mobile phone (of the type commonly referred to as smartphone) or another mobile telecommunications device (e.g. a tablet or the like), enabled for data transmission (possibly in addition to voice communication); the apparatus 2 comprises at least processing means (such as a data processing unit, i.e. a microprocessor), network connection/transmission means, a memory containing at least one data acquisition program, the functions of which will be detailed below, a memory for allocation of the acquired data, as will be further explained below (these elements, which are per se known, are included in the telephone apparatus 2 and are not therefore shown in Fig. 4).

The data acquisition means of the mobile apparatus 2 comprise at least one video camera 211, which can take video shots, and preferably also a microphone, so that the videos captured by the video camera 211 will be associated with external sounds and noise.

The data acquisition means may advantageously also include geolocation means, which allow finding the position of the mobile apparatus 2 and, consequently, of the vehicle V whereon it is located.

The data acquired by the mobile apparatus 2 may further include telemetric data, i.e. speed and/or acceleration along one or more axes, supplied by an accelerometric mass or the like, with which the apparatus 2 is equipped.

The apparatus 2 may also be configured for providing assistance for filling out the accident report document, so as to make it easier to specify the damages suffered or caused, thus improving the correctness of the data entered into the accident report document. In particular, the processing means are also configured for generating an interactive graphic representation, wherein said graphic representation can be actuated via the acquisition means in order to acquire information about the damages suffered by the vehicles V involved in the accident. The acquisition means of the apparatus 2 may preferably comprise a touch-sensitive interface (e.g. a display covered with a capacitive or proximity sensor 230), which can show the interactive graphic representation of the vehicles and allow highlighting the damages through a pointer controllable via said touch-sensitive interface.

It should be noted that the above-mentioned elements are already present in some models of cellular telephones currently available on the market; it is therefore deemed unnecessary to provide further details in this regard, and reference should be made for brevity to the technical literature on this matter.

However, what is not yet known are the functions carried out by these elements, which may advantageously be controlled by a program stored in the mobile device 2, which program can be downloaded externally, e.g. through distribution services (via Internet, cable or the like) provided by specialized companies.

Said acquisition program, when executed, has the processing unit of the apparatus 2 carry out the following steps:
- storing at least a part of a video/audio data stream generated by the video camera 211, preferably compressed in MPEG format, which can then be saved into the memory of the apparatus 2;
- storing at least a part of the data relating to the position of the mobile apparatus 2, provided by the geolocation means with which it is equipped;
- storing at least a part of the telemetric data provided by the accelerometric means (mass, etc.) with which the mobile apparatus 2 is equipped;
- transmitting said data to the processing means 10 through the network, the mobile apparatus 2 being equipped with transmission means configured for allowing access to a mobile network and/or a WiFi network and/or the like.

The processing means 10 preferably verify the authenticity of the received data and, in the affirmative case, store them; the authenticity verification thus carried out offers the advantage that the transmitting apparatus 2 is exactly identified, thus also identifying the physical person with whom said apparatus 2 has been associated or to whom it has been assigned, so as to reduce the probability that the organization accountable for paying compensation for damages will suffer a fraud.

In addition, the verification of the authenticity of the received material advantageously does not require the use of special algorithms for encrypting and decrypting the data acquired by the mobile apparatus 2 and received by the processing means 10.

It must also be pointed out that, since such data are heterogeneous because they include video images, telemetric data and geolocation data, encryption and decryption could not be made in the same way, and therefore there would be a risk of losing coherence among the different information.

Authorized people can then consult (via the computer terminals T) the accident data (i.e. the accident report forms and the related data detected during the respective accidents), the authenticity of which will have been ascertained by the processing means 10, so that they will be able to take any necessary steps.

Authorized people may include personnel of insurance companies, technicians and experts, judges, etc., carrying out their own official duties.

Note that the completed accident report form and the data detected during the accident can be sent to the processing means 10 by the mobile apparatus 2 either directly, by network transmission of a message of appropriate format and/or size (SMS, MMS, email, binary format specifically created for this purpose, or the like), or by download to a private computer PC, from which they can then be sent to the processing means 10 over the network.

These options are both shown in Figure 2, wherein in one case the device 2 is located aboard the vehicle V and is directly transmitting the data (via SMS message or electronic mail) to the processing means 10 by using its own network connection, whereas in the second case the data acquired by the apparatus 2 are downloaded to a personal computer PC connected to the network, and then sent by the latter to the processing means 10.

The user interface towards the latter preferably consists of an Internet site and/or an application (a so-called App) also allowing filling out the accident report form, thus making data transmission easier and quicker also for unskilled people. In fact, the sooner the parties involved in a road accident will transmit the accident report form and the data detected during the road accident, the lower the probability that the organization accountable for paying compensation for damages will be swindled, because there will not be sufficient time to try to fraudulently modify the data detected during the road accident (e.g. increasing the longitudinal acceleration value in the case of a rear-ending crash).

The mobile apparatus 2 is configured for executing the program when a user selects a specific application, preferably identified by a corresponding icon 231 shown on the display 230 of the apparatus 2, or when he/she presses an enabled key, if it is equipped with a keyboard.

To this end, several options are available.

The first option is that the program is coded in a manner such that, when the accelerometric means detect a collision caused by an accident (e.g. acceleration along a certain axis), said apparatus 2 will acquire, for a certain period (e.g. thirty seconds) a stream of audio-video data generated by the video camera 211, a stream of geolocation data generated by the positioning means, and a stream of telemetric data generated by the accelerometric means at successive instants and at a predetermined frequency, which may vary from case to case but is preferably higher than 10 Hz: this means that the data are acquired every tenth of a second or smaller fractions thereof (even hundredths or thousandths of a second).

In order to make the method of the invention executable on a large scale also by the general automotive public through the use of mobile apparatuses 2 such as cellular phones, tablets and similar devices of common use, it is necessary that the acquired data can be sent by the same apparatuses 2 in formats suitable for transmission over existing telecommunications networks (cellular telephony, Internet, etc.).

Although for video and audio data it would be preferable to use compression formats such as MP3, MPEG and the like, transmission may understandably be a problem when large quantities of data are involved, also because adequate networks (i.e. with a sufficiently broad band) are not always available.

Therefore, transmitting images about long time intervals (longer than 60 seconds) is not a feasible option, since it would require the transmission of very large amounts of data (very big files).

Consequently, it is inconceivable to activate the mobile apparatus 2 every time the driver gets into the car and to acquire data throughout the journey, even just for a few tens of minutes, as is the case when driving through town (e.g. from home to work).

In other words, it can be said that, since the moment when an accident may occur cannot be foreseen a priori, a solution needs to be found to avoid having to acquire and store large quantities of data provided by the apparatus 2 throughout the journey of the vehicle V, because this would require too much memory that could not be supported by a mobile apparatus 2 consisting of a common mobile phone or another similar portable device.

To overcome this problem, one option is to set up the apparatus 2 for acquiring and storing the (audio-video, telemetric, positioning) data into a local memory area in a continuous stream, wherein the data are overwritten after a certain period of time, e.g. every 30 or 60 seconds.

When the vehicle V equipped with the apparatus 2 has an accident, the latter's accelerometric means will detect a speed and/or acceleration variation that will trigger a procedure ("routine") of the apparatus 2, whereby the data relating to a preset time interval before and after the accident (e.g. 15-20 seconds before and after) will be stored into a special memory area of the apparatus 2 and will then be sent to the processing means 10.

As explained above, transmission may occur directly through an SMS or MMS telephone message, an email message, or a specially developed binary format, in that the apparatus 2 is a mobile telecommunications device such as a mobile phone, a tablet or the like.

Transmission may be triggered either automatically by the apparatus 2, if the latter has been so programmed, or manually.

The data detected by the acquisition means of the apparatus 2 during the accident can be transmitted to the processing means 10 prior to the completed accident report form, thus reducing the risk that the organization accountable for paying compensation for damages will be cheated, because a swindler will not have sufficient time to try to modify (to his/her advantage) the data detected during the accident, and there will be a high probability that any incoherence between the accident report form and said data will be detected by the processing means 10.

As an alternative to or in combination with this mode of operation, according to a preferred embodiment of the invention the apparatus 2 continuously acquires and stores the audio-video, telemetric and geolocation data of the vehicle V whereon it has been installed for long preset periods, e.g. 10 minutes or even longer, depending on the memory capacity of the mobile apparatus 20.

Preferably, the length of said period can be set at will by a user, e.g. prior to beginning a journey of known duration.

If during such time interval no accident takes place, the acquired data will be automatically deleted by the apparatus 2, thereby freeing up memory space for future use, for a period equal to the previous one.

If, on the contrary, an accident occurs during said time interval, the significant data, i.e. those relating to the instants before and after the accident (a few seconds will suffice), can be selected from the video, audio, telemetric and geolocation data stored in the apparatus 2.

This selection can be made by using image processing programs like those available in some models of mobile phones (smartphones), or by using suitable (software) programs created for processing telemetric and geolocation data, which can be installed into the mobile apparatus 2 and/or a computer PC, i.e. a personal computer or the like.

In this way, data packets (i.e. files) of limited size are advantageously obtained, which can then be easily transmitted to the processing means 10 directly by the apparatus 2, along with the accident report document, via messages (SMS, email or the like); of course, the same data selection and transmission operations can also be carried out by using a computer PC for private use connected to the network, as shown in Fig. 2.

The mobile apparatus 2 may also comprise optical reading means configured for reading information in an assisted manner, e.g. reading the data of the insurance certificate of the other party involved in the accident, thus improving the correctness of the data entered into the accident report document.

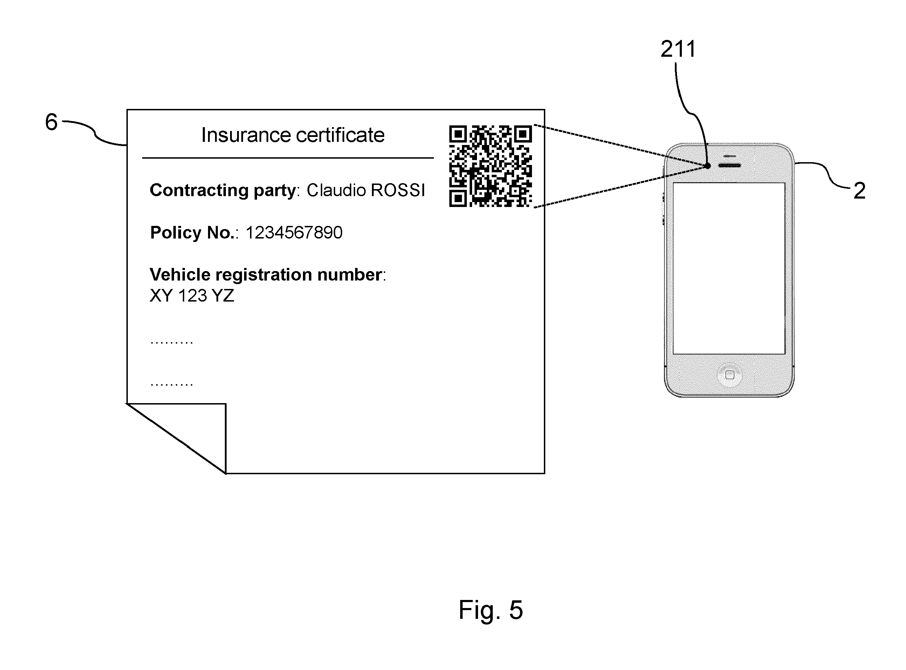

Also with reference to Fig. 5, the optical reading means may comprise the video camera 211 and a software program for image recognition, which, after having acquired the image of the number plate and/or of the vehicle identification number and/or of the insurance certificate and/or the like, will convert said image into text by executing a so-called optical character recognition process (OCR).

As an alternative to or in combination with the above, the recognition software can also extract the data from a bar code 61 that may be either monodimensional or, preferably, bidimensional (such as, for example, a QR-code like the one shown in Fig. 5), in which information about the insured party (name, insurance policy contracting party, policy number, vehicle registration number, insurance company, etc.). It must be pointed out that this bar code 61 may preferably be shown on the insurance certificate 6 of the insured party, so that it will be very likely found on every circulating vehicle.

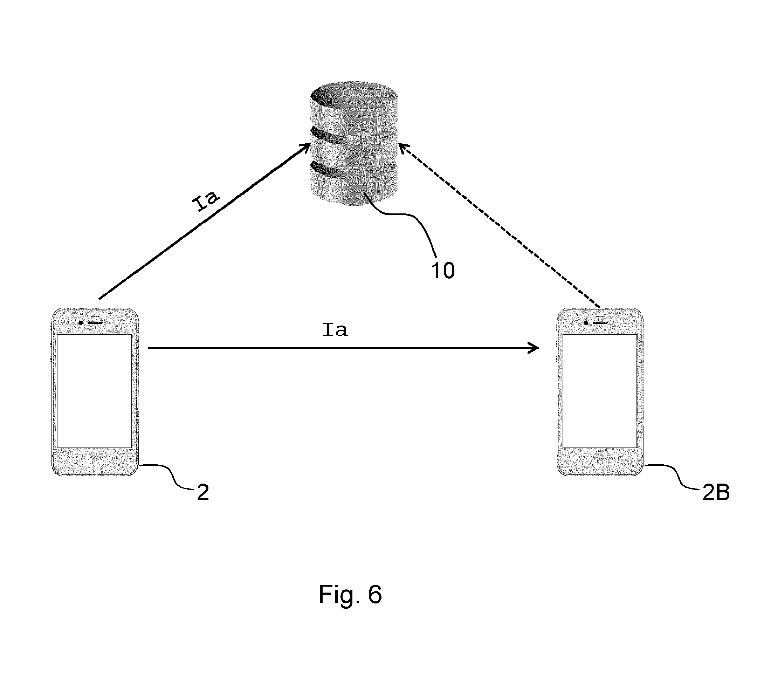

With reference to Fig. 6, the exchange of data Ia (names, insurance data, damages, etc.) between the parties may also advantageously take place through the communication means of the apparatus 2 (e.g. USB, Bluetooth, email, NFC or the like). These communication means can thus allow the exchange of one or more messages, containing the data Ia, with a second apparatus 2B, i.e. establishing a connection between two similar apparatuses 2,2B, so as to further improve the correctness of the data entered into the accident report document.

Furthermore, when data are exchanged between two such apparatuses 2,2B, the apparatus 2 can preferably send a copy of said data Ia to the processing means 10 as well, so that the processing means 10 will be informed about the exchange of data between the two apparatuses 2,2B (in particular about the instant when the exchange has occurred) and about what data have actually been exchanged. In this way it is possible to reduce the risk that the organization accountable for paying compensation for damages will be swindled, because said organization will have the possibility of verifying that no changes have been made (after the exchange) to the data written in the accident report document.

In addition to the above, the second apparatus 2B will be able, after having received the data Ia, to fill out another accident report document and send it to the organization accountable for paying compensation for damages in electronic format (preferably by sending said document in PDF format to the processing means 10 by electronic mail) or in paper format (e.g. by regular mail). Thus, two distinct accident report documents are transmitted to the processing means 10, which documents can then be used for validating the claim to be made to the respective organizations accountable for paying compensation for damages. In fact, the information contained in both accident report documents must be coherent.

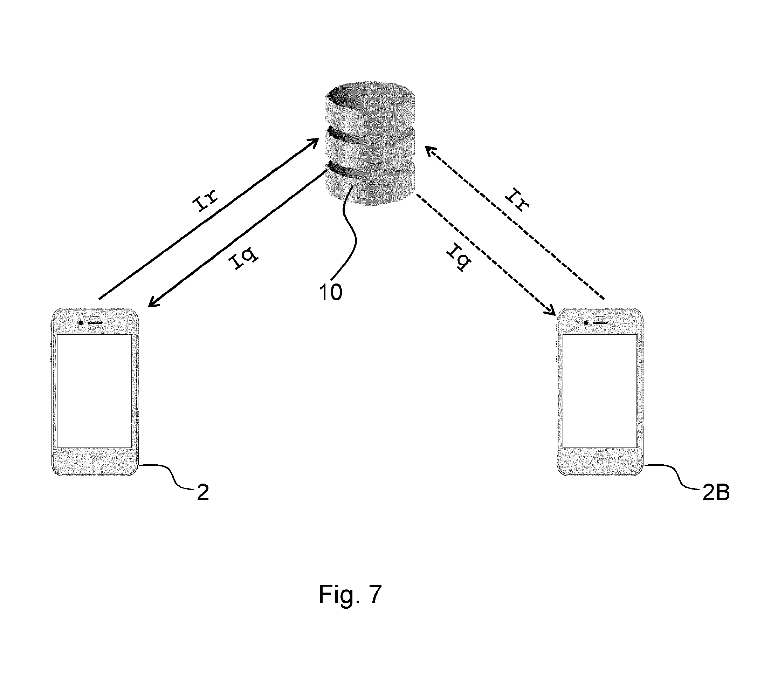

Also with reference to Fig. 7, the apparatus 2 may also be configured for exchanging information with the processing means 10 during the assisted data acquisition process, so that said processing means 10 can verify the authenticity of the data entered and/or provide information useful for verifying the correctness and truthfulness of said data.

In particular, each one of the mobile apparatuses 2,2B may transmit a first message containing request information Ir (e.g. the registration and/or policy numbers), which will then be used by the processing means 10 for searching for and/or generating verification information Iq (e.g. insured vehicle type and/or policy validity status and/or other information), wherein said verification information Iq will be incorporated into a second message and transmitted to the mobile apparatus 2,2B that sent the first message.

For example, after the registration number and/or the insurance policy number have been entered, the apparatus 2 will transmit to the processing means 10 the information just acquired, so that the processing means 10 will be able to, preferably in real time, search for the verification information Iq corresponding to the entered registration number and/or policy number and send it to the apparatus 2, which is preferably configured for highlighting it (e.g. by displaying it in a bright colour) to its user; in this manner, the user of said apparatus 2 will be able to understand if there are any problems/inconsistencies (e.g. a vehicle/person with expired insurance, an insurance policy not corresponding to the vehicle involved in the accident, a stolen vehicle, or the like) and can therefore take the necessary actions, e.g. call the police or the like, so as to reduce the risk that the organization accountable for paying compensation for damages will be swindled.

The above example of the invention is particularly advantageous because it can be implemented on commercially available mobile phones, thus requiring no additional costs for specific apparatuses.

This embodiment is therefore particularly suitable for large-scale applications like those involving private car drivers, in that on the one hand the data acquisition means can consist of common cellular phones or other widespread mobile devices, while on the other hand the authenticity and reliability of the information transmitted by them are verified in an effective and quick manner.

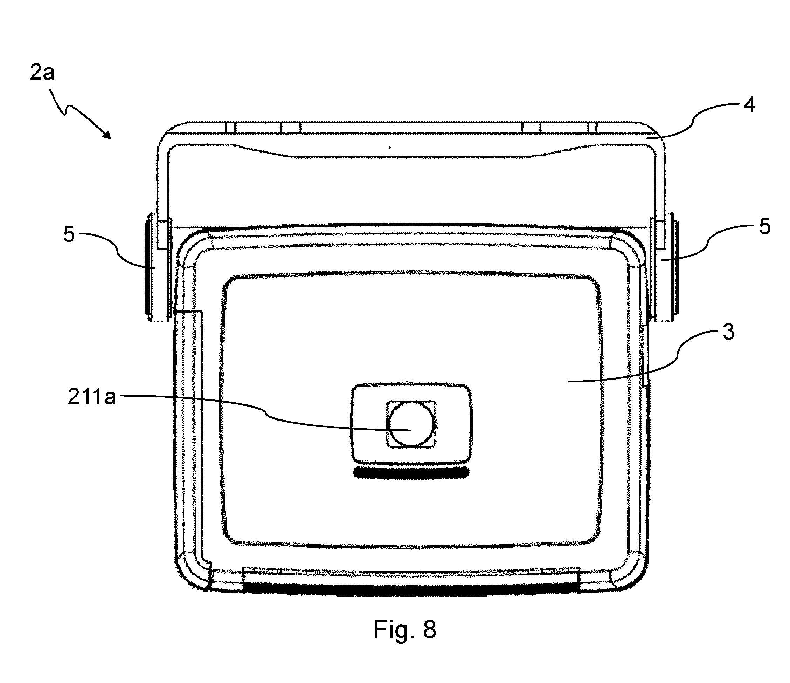

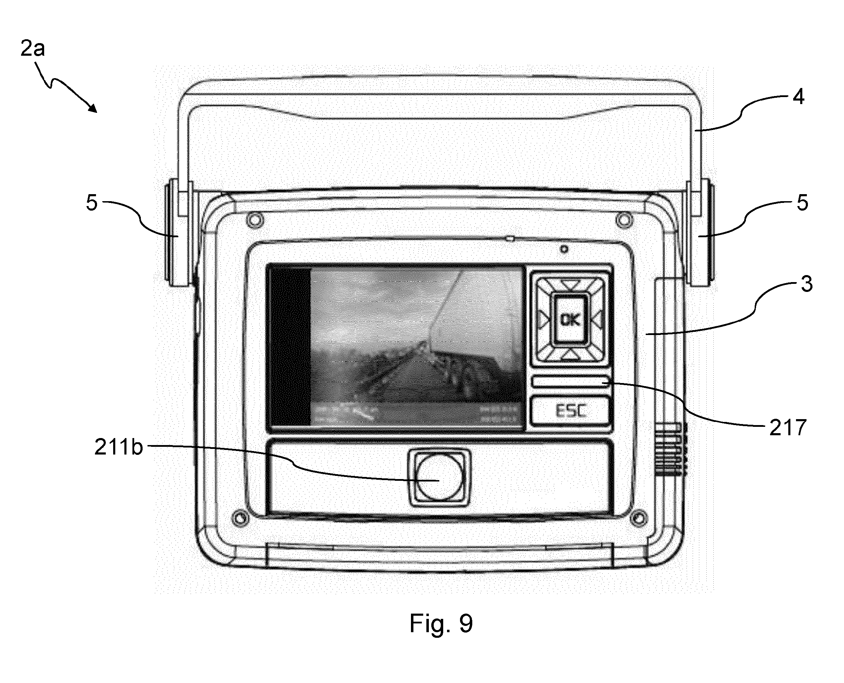

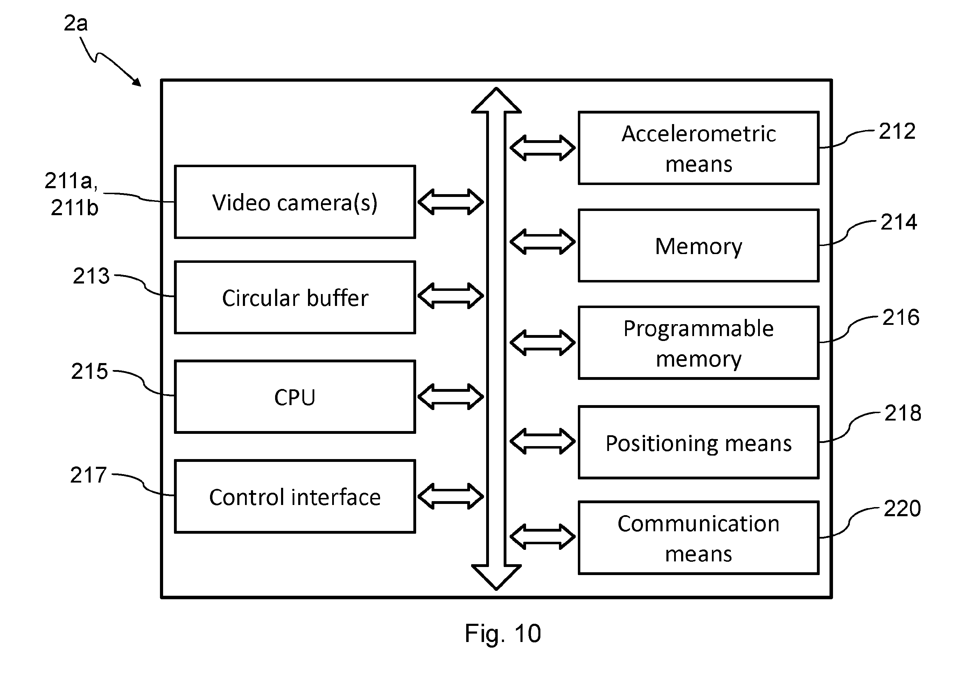

The invention may nonetheless be subject to variations, one of which will now be described with reference to Figures 8-10, which show a mobile apparatus 2a intended for installation on a vehicle V, similarly to the previous case.

The apparatus 2a has similar functionalities as the apparatus 2 of the first embodiment, even though it is not a cellular phone, but a device specifically designed for the functions that it has to carry out.

The apparatus 2a comprises a body 3, preferably parallelepiped in shape, and a support 4 attached to said body 3 through constraining means 5, such as, for example, one or more rotary hinges, which allow the body 3 to rotate relative to the support 4. In this way, the apparatus 2a can be constrained to a vehicle by means of the support 4. In addition, the constraining means 5 allow adjusting the position of the body 3 with respect to the support 4, so as to make it easier to position and install the apparatus 2a on a vehicle like a car, a motorcycle, a truck or the like.

This apparatus 2a can preferably be positioned in proximity to the windscreen of a car or a van/truck, or the fairing of a motorcycle. In fact, the apparatus 2a also comprises data acquisition means that preferably comprise a first video camera 211a, preferably positioned within the body 3 so as be able to frame the main direction of travel of the vehicle equipped with said apparatus; said data acquisition means may optionally comprise also a second video camera 211b, which is preferably turned by 180° relative to the first video camera 211a, so as to be able to frame the rear window and/or any passengers in the rear seat of a car (let us think, for example, of a public car like a taxi cab, where law and order problems may arise). In this manner, images, i.e. visual data, of the people possibly involved in an accident can be obtained, so as to further reduce the risk that the organization accountable for paying compensation for damages will be swindled. In fact, it will be possible to verify, for example, if a head injury claimed by a passenger is real, since it will be objectively possible to ascertain if his/her head actually hit an object, e.g. one of the front seats.

The apparatus 2a further comprises detection means configured for generating at least one signal pertaining to a preset condition of the vehicle, so that said apparatus 2a can detect the occurrence of said preset condition, e.g. the one corresponding to a road accident, a theft, an aggression, etc. These detection means preferably comprise accelerometric means and/or at least one push-button, wherein said accelerometric means comprise an accelerometer preferably with two or more axes (e.g. a MEMS accelerometric sensor) capable of detecting accelerations taking place during a road accident (e.g. a collision between vehicles or a crashing motorcycle or the like) and/or an aggression or a theft (e.g. a shock necessary for breaking a window of a car).

It is nevertheless possible for the man skilled in the art to use, as detection means, sensors of other kinds (e.g. pressure sensors, volumetric sensors, or the like) without however departing from the teachings of the present invention.

As will be better explained below, it must be pointed out that the data acquisition means may also comprise the detection means.

The apparatus 2a also comprises a circular buffer 213 in signal communication with the data acquisition means, i.e. with one or more video cameras 211a,211b, preferably through a data bus or a wireless connection; said circular buffer 213 is configured for recording, in a continuous manner, the video stream coming from the data acquisition means, so as to keep in memory, for example, the video recording of the time period, preferably 10-20 seconds, that precedes the occurrence of the preset condition, i.e. the road accident. This circular buffer may also be provided by means of a specially developed memory chip or a memory, e.g. a flash memory, the read/write access to which is controlled by a software or hardware component implementing the access discipline of the circular buffer, i.e. when the buffer is full, older data are overwritten by newer data (just acquired by the data acquisition means). By using the circular buffer 213 one can further reduce the risk that the organization accountable for paying compensation for damages will be swindled, since objective information preceding the accident can be provided.

The apparatus 2a further comprises memory means 214 that can permanently store the information acquired by the data acquisition means, such as, for example, videos captured by the video cameras 211a,211b and/or telemetric information acquired by the accelerometers 212 and pertaining to one or more events of interest. These memory means 214 may comprise a mass memory, preferably a flash memory, and/or a hard disk, and/or the like.

It must be pointed out that the memory means 214 may also be used for containing the data of the circular buffer 213, thereby simplifying the architecture of the apparatus 2a. In fact, as aforementioned, the circular buffer can be implemented by adequately disciplining the management of the accesses (read/write operations) to a generic memory through suitable software/hardware well known to those skilled in the art.

The apparatus 2a further comprises a central processing unit (CPU) 215 in signal communication with at least the detection means 212; said CPU 215 is configured, for example through suitable software, for transferring, whether directly or indirectly, e.g. by means of the direct memory access (DMA) mode, at least a part of the contents of the circular buffer 213 into the memory means 214 when the detection means detect a preset condition (road accident, robbery, theft, etc.), i.e. when said detection means generate a signal indicating said preset condition.

In addition, the CPU 215 may also be configured for transferring into the memory means 214 the data acquired by the data acquisition means (e.g. by at least one of the video cameras 211a, 211b) within a time interval (of preset duration), the beginning of which coincides with or is subsequent to the time instant when the preset condition of interest has occurred. It is thus possible, in the event of a road accident, to store the recording of the video cameras 211a,211b pertaining to the events that precede and follow an accident involving a vehicle equipped with the apparatus 2a according to the invention; said apparatus 2a is, in fact, preferably configured for recording a video stream concerning the period of 2-20 seconds before and the period of 2-20 seconds after the time instant when the condition of interest has occurred (in this case, the accident). It must be highlighted that the man skilled in the art may use different periods that may better suit specific application requirements, without however departing from the teachings of the invention.

It should also be noted that all of the above-described components are in logical communication with one another through a data bus of the kind which is well known to those skilled in the art. The man skilled in the art may use any architecture suitable for connecting together the different parts (e.g. a star-type connection architecture), without however departing from the teachings of the present invention.

Furthermore, when the data acquisition means include more than one component, the data streams generated by said components may be synchronized and joined into a single data stream. In this manner, the video stream captured by the video cameras 211a,211b can be joined to an audio stream that may be acquired through a microphone comprised in the apparatus 2a and/or to a data stream that may, for example, be detected by the accelerometers (telemetric data stream). It will thus be possible to analyze not only a video stream, but also an audio stream and/or a telemetric data stream that may be useful for better understanding the dynamics of the event of interest.

In fact, by acquiring at least two data streams, the verification means can advantageously verify the authenticity of the information collected by the apparatus 2a by comparing the information contained in the acquired streams on the basis of a common time reference. In this way it is possible to further reduce the risk that the organization accountable for paying compensation for damages will be swindled.

One example of this approach is given by the comparison between the speed information detected through the GPS and the acceleration information detected by the accelerometers; such a comparison allows, for example, establishing if the speed detected at a certain time instant is compatible with the accelerations detected previously. One way to verify if the speed information is compatible with the accelerometric information comprises the following steps:
a. integrating, during a time interval, an acceleration function defined by points from the values detected by the accelerometers, so as to obtain a speed variation value;
b. calculating the arithmetic difference between the speed values detected by the GPS at the end and at the beginning of the time interval;
c. checking if the result obtained from the integration carried out at step a. is compatible with the difference obtained at step b.

One way to make the comparison at step c. is to calculate the arithmetic difference between the results respectively obtained at the end of steps a. and b., and to verify whether the absolute value of this difference is smaller or not than a preset threshold value. In fact, if the absolute value of this difference is smaller than said threshold value, then the data can be considered to be authentic; otherwise, the data will have to be considered to have been altered.

The data stream generated by the acquisition means is then preferably coded in accordance with one of the MPEG family standards, by using any coding algorithm well known to those skilled in the art.

As an alternative or in addition to the data detected by the accelerometers 212, the data acquisition means may comprise positioning means 218 (e.g. a GPS/GLONASS/EGNOS, A-GPS receiver or the like), so that the telemetric data stream may also include position information. It will thus be possible, at the analysis stage, to represent on an interactive map (e.g. by using Google Maps, Bing Maps or the like) the motion of the apparatus 2a before and after the accident.

Furthermore, by exploiting the position data and a cartographic system (e.g. Google Maps, Bing Maps or the like), the CPU 215 can be configured for generating, in an automatic or pseudo-automatic manner, the graph of the accident (see box 13 in Fig. 1) to be represented in the accident report form. In this way it is possible to reduce even further the risk that the organization accountable for paying compensation for damages will be swindled, because one can reduce the probability that the drawing of the vehicles involved in the accident can be purposely created for obtaining an indemnity.

By using said positioning means 218, it is also possible to know the motion speed of the apparatus 2a, and hence of the vehicle equipped with said apparatus 2a.

As an alternative or in addition to the positioning means 218, the apparatus 2a may comprise a data interface (not shown in the drawings), which allows it to interface to the data network of the vehicle equipped with the apparatus 2a (typically a CAN bus network). In this manner, the apparatus 2a can also acquire and store into the telemetric stream data about wheel speed, engine rpm, selected gear, operation of the anti-lock braking system (ABS) and/or of the electronic stability program (ESP), etc. Furthermore, through this data interface the apparatus 2a can also read the vehicle identification number (VIN) associated with the engine of the vehicle. The usefulness of this number will become apparent below.

The information or part thereof which is transferred into the memory means 214 upon the occurrence of the road accident is then used by the central processing unit 215. In fact, said central processing unit 215 can be configured for generating integrity information based on at least a part of the information transferred into the memory means 214 from the circular buffer 213 and/or from the data acquisition means.

As will be explained hereafter, when the apparatus 2a generates said integrity information, the verification means of the system according to the invention are allocated in both the processing means 10 and said electronic apparatus 2a.

The integrity information is preferably generated by the CPU 215, which is configured for executing a cryptographic hashing algorithm, such as, for example, the Message Digest algorithm 5 (MD5), the RIPEMD, the Secure Hash Algorithm (SHA), or the like. These algorithms allow the generation of a summary (hash) of a dataset, which in this case is represented by the information acquired by the apparatus 2a before and/or during and/or after a road accident. The integrity information, generated via these algorithms immediately after entering said operating condition, can thus be used for verifying that the information coming from the memory means 214 is intact, and hence has not been altered.

As a matter of fact, when using prior-art solutions a user can download information from the memory means 214, modify it (e.g. by using video editing software), and then supply it as evidence (e.g. to an insurance company), without it being possible to objectively verify that said information has not been altered.

With the above-described solution, the processing means 10 can verify the integrity of the information acquired by the apparatus 2a before and/or during and/or after the event. In order to do so, said processing means 10 can recalculate the integrity information based on the information downloaded from the memory means 214 (or supposed to have been downloaded from said memory means 214) and verify that said recalculated integrity information correspond to the integrity information generated by the apparatus 2a immediately after or during the road accident, i.e. generated on the basis of at least a part of the information transferred into the memory means 214 from the circular buffer 213 and/or from the data acquisition means after the occurrence of the accident.

It is nevertheless still possible for the man skilled in the art to have the CPU 215 generate integrity information by means of other algorithms (e.g. generation of parity, checksum, or the like), without however departing from the teachings of the present invention.

This integrity information can be attached to the accident report form (e.g. by entering a sufficiently long alphanumeric string into a special field of said form), and it will thus be possible to verify that the acquired material has not been altered. This reduced the risk that the organization accountable for paying compensation for damages will be swindled through the provision of digital material (videos and/or telemetry graphs) specially created in order to obtain an indemnity.

The apparatus 2a comprises also a control interface 217, through which a user can control the operation of said apparatus via one or more push-buttons. In addition, the detection means may comprise one or more push-buttons of the control interface 217, so that the user can signal a road accident in which he/she has not been directly involved, and have the apparatus 2a store into the memory means 214 information acquired by the apparatus 2a before and/or during and/or after the event of interest.

This further reduces the risk that the organization accountable for paying compensation for damages will be swindled, because information acquired by a witness during a road accident can also be attached to the accident report form. It must be pointed out that the accident report form explicitly includes the possibility of providing witness contributions (see box 5 in Fig. 1).

The data acquisition means may also comprise one or more push-buttons of the control interface 217, so as to record into the memory means 214 the actuation of one or more push-buttons. It will thus be possible, for example, to evaluate the state of consciousness of a person involved in the accident.

It must be pointed out that the parts of the apparatus 2a just described are preferably all arranged inside the body 3, so as to advantageously ensure increased compactness of the apparatus 2a and ease of installation and/or transfer from one vehicle to another.

It is nevertheless still possible for the man skilled in the art to arrange the above-mentioned parts in different areas of the vehicle (e.g. the accelerometers in the bumpers, the second video camera near the rear number plate, etc.), without however departing from the teachings of the present invention.

The integrity information can be stored in several ways. In fact, said information can be stored into the memory means 214 and subsequently downloaded into the memory 13 of the processing means 1, e.g. through a network or USB interface or the like, when it is desired that said processing means 10 verify the integrity of the information acquired by the apparatus 2a at the occurrence of the preset operating condition.

In order to advantageously reduce the probability that the integrity information might be generated after a modification (e.g. by video editing) of the information contained in the memory means 214, the apparatus 2a may comprise a programmable memory 216 that can be written only once and read multiple times, such as a Programmable Read Only Memory (PROM). In fact, each cell of a PROM memory can be written only once by using signals of adequate voltage. In this way it is possible to ensure that the integrity information present in the programmable memory 216 has been generated immediately after the event of interest, i.e. at a time instant when a "malicious" user could not (yet) alter the contents of the memory means 214.

Access to the contents of the memory 216 can be gained either from outside the apparatus 2a, e.g. through a network or USB interface, or only by removing the programmable memory 216.

It must be pointed out that the contents of the programmable memory 216 needs to be acquired at the stage wherein it is necessary to verify the integrity of the information acquired by the apparatus 2a following an accident, e.g. when an expert of an insurance company or a bailiff or an examining magistrate needs to place on record the information acquired by the apparatus 2a.

In order to advantageously improve the protection of the information acquired by the apparatus 2a against attacks by a computer expert, the integrity information may also be generated on the basis of time information, e.g. the date and time when the event of interest has occurred, in addition to the information already described. This time information may, for example, be associated with the data acquired by the positioning means 218, which then become a part of the telemetric stream stored into the memory means 214, or else it may be stored into the memory means 214 separately from the other information acquired before, during and after the event of interest, e.g. contained in a text file. In this manner, when the processing means 10 verify the integrity of the information that is supposed to have been downloaded from the memory means 214 and to not have been altered afterwards, the processing means 10 will have to recalculate the integrity information based on the information that is supposed to have been downloaded from the memory means 214 and on the time information (that may also be present in the memory means 214).

If time information is also used for generating integrity information to be stored into the programmable memory 216, it will be more complex and difficult to generate a false event of interest, e.g. putting on an accident, because one can be reasonably certain about the time at which said event occurred. In fact, highly reliable time information can help investigators, for example, verify the declarations of any witnesses who were present at the time of the accident or the versions of the people involved in said accident, thus reducing the risk that the organization accountable for paying compensation for damages will be swindled.

The apparatus 2a also comprises communication means 220 allowing it to communicate with a data network external to said apparatus 2a. These communication means 220 preferably comprise a GSM/GPRS/3G/4G cellular modem, a Bluetooth interface or the like, allowing the apparatus 2a to transmit the information acquired during an accident and/or the integrity information, e.g. through the Internet or a dedicated data circuit or another type of network, to the processing means 10.

In this manner it is possible to further improve the robustness of the information acquired by the apparatus 2a against attacks by a computer expert, since such information reside (only or also) on a computer different from the apparatus 2a. Furthermore, it must be pointed out that the information relating to the data acquired by said apparatus 2a during a road accident is preferably transmitted immediately after it has been generated or as soon as possible (e.g. because the event of interest has occurred in an area without cellular coverage), thus increasing the probability that the information collected by the apparatus 2a before, during and/or after the accident is intact (i.e. it has not been altered by a computer expert) and that any modifications will be objectively detected, since a computer expert will not have had enough time to modify said information collected by the apparatus 2a and to regenerate the integrity information. This further reduces the risk that the organization accountable for paying compensation for damages will be swindled.

It must be pointed out that the apparatus 2a may also be replaced by a smartphone (e.g. like the one used in the preceding embodiment), a tablet or the like, where suitable software can be installed (e.g. downloadable from an online store of applications for mobile devices or the like), which can execute a method for filling out an accident report form according to the invention; said method comprises the following steps:
- acquiring, through data acquisition means 211,211a,221b,212,218, information relating to vehicles and/or drivers of said vehicles that have been involved in the road accident, wherein said information concern data detected during the road accident;
- entering and/or attaching, through processing means 215, at least a part of said information acquired during the acquisition step into/to the accident report form;
- transmitting, through transmission means, the accident report form to the processing means 10, along with the information relating to data detected during the road accident.

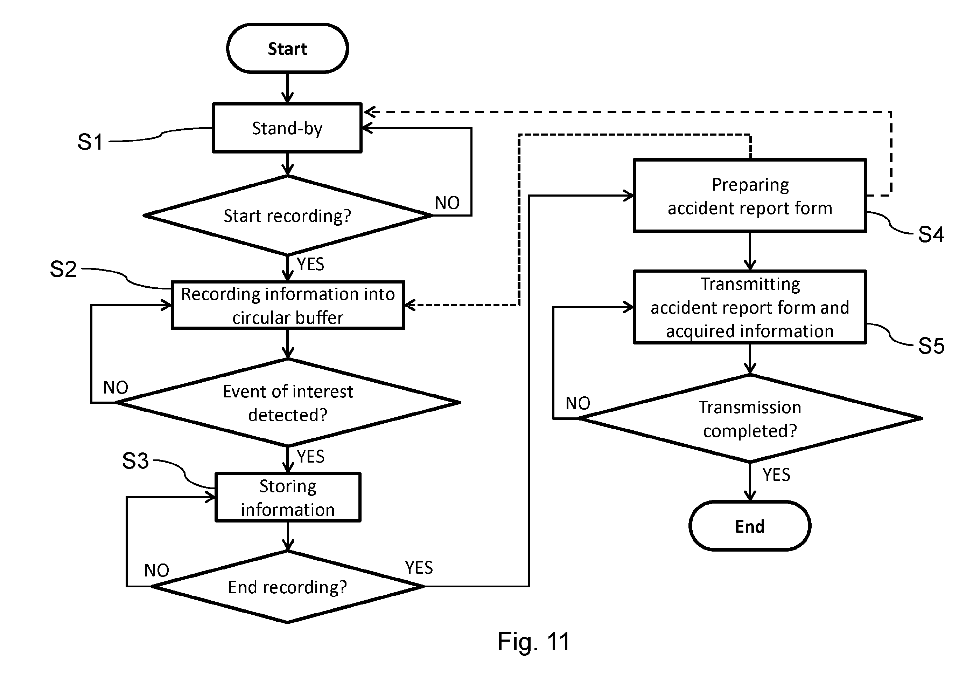

Also with reference to Fig. 11, one possible mode of operation of the apparatus 2a according to the invention is represented by means of a finite-state machine; said mode of operation can be implemented through software which is then executed by the central processing unit 215 and/or by a programmable hardware component (e.g. a CPLD or a FPGA or the like) or a specially developed one. The finite-state machine comprises the following states:
- a stand-by state S1, wherein the apparatus 2a carries out no recording function;
- a recording state S2, wherein the apparatus 2a records into the circular buffer 213 the information acquired by the data acquisition means, e.g. at least one of the video cameras 211a,211b;
- a storing state S3, wherein at least a part of the contents of the circular buffer 213 and/or of the information generated by the data acquisition means after the road accident are transferred into the memory means 214;
- an accident report form preparation state S4, wherein the central processing unit 215 enters into and/or attaches to the accident report form the information relating to the data detected during the road accident, i.e. a part of the data transferred into the memory means 214 during the state S3 (e.g. videos and/or telemetric data) and/or information generated from such data (e.g. integrity information). Furthermore, while in this state the apparatus 2a may allow the parties involved in the accident to fill out the accident report form by using the acquisition means (e.g. a touch screen, the control interface 217, or the like). Also, the apparatus 2a may be configured for sharing said accident report form (e.g. via a Bluetooth, WiFi or 3G/4G connection, or the like) in order to facilitate the completion thereof preferably by means of a second apparatus (e.g. a tablet, a smartphone 2, a laptop PC or the like), through which a user can more easily fill out the accident report form;
- a transmission state S5, wherein the accident report form, preferably completed, and the information relating to the data acquired by the apparatus 2a during the road accident are transmitted to the processing means 10 (e.g. by means of a 3G/4G, WiFi or Bluetooth connection, or the like).

When the apparatus 2a is turned on, it enters the state S1, where it stays until recording start conditions occur which cause the recording to start; when this happens, the machine enters the state S2. These conditions may occur, for example, when the engine of the car is started and/or a surveillance mode is selected through the control interface 217, which allows recording information into the circular buffer 213 even when the vehicle is not moving, thus making it possible, for example, to document accidents caused by other drivers' clumsy parking manoeuvres. When an accident is detected, the apparatus 2a switches from the state S2 to the state S3, wherein it stores the information acquired before and/or during and/or after the accident into the memory means 214; when storage is completed, the apparatus 2a enters the state S4, wherein the accident report form is prepared, attaching thereto the above-mentioned information and entering any data that are not automatically retrievable (e.g. the other party's policy number, the registration number of the vehicle involved, the names of any witnesses, or other information). After having generated the integrity information, the apparatus 2a enters the state S5 and transmits the collected information to the processing means 10. Afterwards, the apparatus 2a will either stop its operation or, as highlighted by dashed lines in Fig. 11, it will enter again the state S1 or the state S2 for a new working cycle.

Of course, many variations are possible with respect to the embodiment described above.

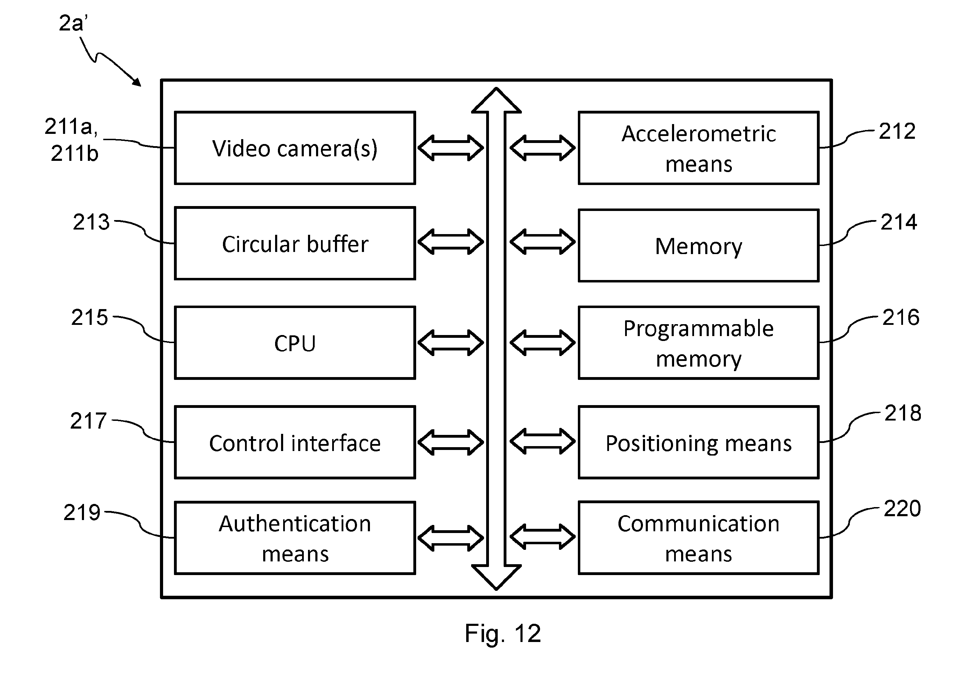

A first variant is shown in Fig. 12; for brevity, the following description will only highlight those parts which make this and the next variants different from the above-described second embodiment; for the same reason, wherever possible the same reference numerals, with the addition of one or more apostrophes, will be used for indicating structurally or functionally equivalent elements.

For the purpose of further improving the robustness of the information acquired by the apparatus 2a' against attacks by a computer expert, this variant comprises an apparatus 2a' similar to the apparatus 2a of the preceding embodiment, wherein said apparatus 2a' additionally comprises authentication means 219 that may comprise, for example, a cryptographic processor (like that of a smart card), which can generate a public key and a private key during an initialization step, hold the generated private key (thus preventing access thereto from the outside), and encrypt the information relating to the data acquired during an accident, through an asymmetric cryptography algorithm (e.g. RSA, Digital Signature Algorithm - DSS, or the like), by using the private key it contains; such integrity information is generated by the CPU 215 as described for the preceding embodiment. This reduces the risk that the organization accountable for paying compensation for damages caused by a road accident will suffer a fraud.

By using the authentication means 219, in fact, one can, for example, be certain that the integrity information is generated by a particular apparatus 2a', i.e. said apparatus 2a' is authenticated.

In order to verify the integrity of the information acquired by the apparatus 2a', the processing means 10 can take the public key during the cryptographic processor initialization step, or even after said step (e.g. by suitably interrogating the cryptographic processor), and then use it to decrypt the integrity information by using the same asymmetric cryptography algorithm used by the cryptographic processor or the corresponding decryption algorithm capable of decrypting the information encrypted by the cryptographic processor. Afterwards, the processing means 10 can verify the integrity information in the same way as described for the preceding embodiment (recalculation of the integrity information, etc.), thereby making it possible to verify the authenticity and integrity of the information collected by the apparatus 2a'.

As an alternative to or in combination with the use of a cryptographic processor as an authentication means 219, the man skilled in the art may use, in a way similar to that described above, a digital certificate (optionally password-protected) and a software implementation of an asymmetric cryptography algorithm.

The man skilled in the art may also use authentication means 219 other than those described above, without however departing from the teachings of the present invention.

Finally, it must be pointed out that, as already mentioned before, the processing means 10 can be managed by an insurance company or a country's central authority (e.g. a ministry) or another body that can ensure a sufficient level of service and a sufficiently high level of security for the collected data to ensure that they are correct and hence reliable; also, in order to better protect the privacy of the data, the latter may be transmitted to the central server by means of a secure data channel, e.g. by using the TLS/SSL cryptographic protocol or the like.

The invention may therefore be subject to many variations, without however departing from the novelty spirit of the inventive idea. It will be apparent to those skilled in the art that in the practical implementation of the invention the illustrated details may have different shapes or be replaced with other technically equivalent elements.

It can therefore be easily understood that the present invention is not limited to the explanatory examples described herein, but may be subject to many modifications, improvements or replacements of equivalent parts and elements without departing from the basic inventive idea, as set out in the following claims.

## Claims

1. Method for creating an electronic accident report document relating to a road accident, wherein information about at least vehicles (V) and/or drivers thereof is transcribed into the document and transmitted to processing means (10),
**characterized in that**
at least a part of said information is acquired and/or transcribed in an electronically assisted manner.

2. Method according to claim 1, wherein acquisition and/or transcription of the information take place upon optical reading of data relating to the vehicles and/or the drivers thereof.

3. Method according to claim 1 or 2, wherein acquisition and/or transcription of the information take place upon reception of data relating to the vehicles and/or the drivers thereof via communication means (220).

4. Method according to any one of claims 1 to 3, wherein the information about the vehicles (V) comprises an interactive graphic representation.

5. Method according to claim 4, wherein the interactive graphic representation comprises a pointer controllable via a touch-sensitive interface (230).

6. Method according to any one of claims 1 to 5, wherein the information about the vehicles (V) and/or the drivers thereof comprises photos and/or videos.

7. Method according to any one of claims 1 to 6, wherein the information about the vehicles (V) comprises an accident graph, and wherein said accident graph is at least partly generated on the basis of the information acquired and/or transcribed in an electronically assisted manner.

8. Method according to any one of claims 1 to 7, wherein the information about the vehicles (V) and/or the drivers thereof comprises accelerometric data generated by accelerometric means (212).

9. Method according to any one of claims 1 to 8, wherein the information about the vehicles (V) comprises geolocation data generated by positioning means (218).

10. Method according to any one of claims 1 to 9, wherein the information about the vehicles (V) and/or the drivers thereof is detected during the road accident.

11. Method according to any one of claims 1 to 10, comprising a verification step, wherein the authenticity of the information entered into and/or attached to the electronic accident report document is verified.

12. Method according to claim 11, wherein, in the course of the verification step, the information detected during the road accident is at least compared with other information entered into the electronic accident report document.

13. Method according to claim 11 or 12, wherein the information detected during the road accident is of at least two different types, and wherein, in the course of the verification step, each type of information is compared with the other types.

14. Method according to claim 13, wherein the information detected during the road accident is of the following types: audio/video, accelerometric, positioning.

15. Method according to any one of claims 1 to 14, wherein the information relating to at least vehicles (V) and/or drivers thereof comprises integrity information, wherein said integrity information is generated at least on the basis of said information acquired and/or transcribed in an electronically assisted manner, and wherein said integrity information can be used for verifying that at least a part of the information entered into and/or attached to the electronic accident report document is not subsequently altered.

16. Method according to any one of claims 11 to 15, wherein the authenticity of the information entered into and/or attached to the electronic accident report document is verified by transmitting to the processing means (10) at least a part of the information acquired and/or transcribed in an electronically assisted manner.

17. Mobile apparatus (2, 2a, 2a') adapted to produce/generate an electronic accident report document following a road accident involving vehicles (V), comprising
- acquisition means (211,211a,221b,212,218,230) adapted to acquire information relating to the vehicles (V) and/or drivers of said vehicles (V) involved in the road accident,
- memory means (214) adapted to store the information relating to the vehicles (V) and/or drivers of said vehicles (V) involved in the road accident,
- processing means (215) configured for entering and/or attaching at least a part of said information contained in the memory means (214) into/to the electronic accident report document,
- transmission means (220) that can transmit the electronic accident report document to processing means (10),
**characterized in that**
the acquisition means (211,211a,221b,212,218,230) are configured for acquiring in an assisted manner information that the processing means (215) enter into and/or attach to the electronic accident report document.

18. Mobile apparatus (2, 2a, 2a') according to claim 17, wherein the acquisition means comprise optical reading means (211,211a,211b), and wherein the processing means (215) are also configured for filling out said electronic accident report document based on data acquired by said optical reading means (211,211a,211b).

19. Mobile apparatus (2, 2a, 2a') according to claim 17 or 18, wherein the processing means (215) are also configured for filling out said electronic accident report document based on data acquired through the transmission means (220).

20. Mobile apparatus (2, 2a, 2a') according to claim 19, wherein the data acquired through the transmission means (220) come from a second mobile apparatus (2, 2a, 2a').

21. Mobile apparatus (2, 2a, 2a') according to any one of claims 17 to 20, wherein the processing means (215) are also configured for generating an interactive graphic representation, and wherein said graphic representation is controllable via the acquisition means in order to acquire the information about the vehicles (V).

22. Mobile apparatus (2, 2a, 2a') according to claim 21, wherein the acquisition means comprise a touch-sensitive interface (230), and wherein the interactive graphic representation comprises a pointer controllable via said touch-sensitive interface (230).

23. Mobile apparatus (2, 2a, 2a') according to any one of claims 17 to 22, wherein the acquisition means comprise audio and/or video acquisition means (211,211a,211b).

24. Mobile apparatus (2, 2a, 2a') according to any one of claims 17 to 23, wherein the processing means (215) are also configured for generating an accident graph on the basis of the information entered into and/or attached to the electronic accident report document.

25. Mobile apparatus (2, 2a, 2a') according to any one of claims 17 to 24, wherein the acquisition means comprise accelerometric means (212).

26. Mobile apparatus (2, 2a, 2a') according to any one of claims 17 to 25, wherein the acquisition means comprise positioning means (218).

27. Mobile apparatus (2, 2a, 2a') according to any one of claims 17 to 26, wherein the processing means (215) are also configured for acquiring information detected by the acquisition means (211,211a,221b,212,218) during the road accident.

28. Mobile apparatus (2, 2a, 2a') according to claim 27, comprising a circular buffer (213) configured for storing the information acquired by the acquisition means (211,211a,221b,212,218) during, before and/or after the road accident.

29. Mobile apparatus (2, 2a, 2a') according to any one of claims 17 to 28, wherein the information acquired by the acquisition means (211,211a,221b,212,218) comprises integrity information, wherein said integrity information is generated by the processing means (215) at least on the basis of the information entered into and/or attached to the electronic accident report document by the acquisition means (211,211a,221b,212,218), and wherein said integrity information can be used for verifying that at least a part of the information entered into and/or attached to the electronic accident report document is not subsequently altered.

30. Mobile apparatus (2, 2a, 2a') according to any one of claims 17 to 29, comprising a control interface (217) in signal communication with the processing means (215), wherein the actuation of the control interface (217) causes a signal to be sent to said processing means (215), and wherein said processing means (215) are also configured for, upon reception of the signal from the control interface (217), entering and/or attaching the information acquired during the witnessed road accident into/to the electronic accident report document, which will be undersigned by the drivers of the vehicles (V) involved in the road accident.

31. System (1) for filling out an electronic accident report document, comprising
- at least one mobile apparatus (2, 2a, 2a') according to any one of claims 17 to 30,
- processing means (10) configured for receiving the electronic accident report document transmitted by the transmission means (220) of the mobile apparatus (2, 2a, 2a'),
and wherein the processing means (10) comprise a central processing unit (11) configured for verifying that the information entered into and/or attached to the electronic accident report document is authentic.

32. System (1) according to claim 31, wherein the processing means (10) are also configured for comparing the information detected during the road accident with at least the other information entered into the electronic accident report document.

33. System (1) according to claim 31 or 32, wherein the information detected during the road accident by the acquisition means (211,211a,221b,212,218) of the apparatus (2, 2a, 2a') are of at least two different types, and wherein the processing means (10) are configured for comparing each type of information with the other types.

34. System (1) according to claim 33, wherein the processing means (10) are configured for comparing the following types of information detected during the road accident: audio/video, accelerometric, positioning.

35. System (1) according to any one of claims 31 to 34, wherein the mobile apparatus (2, 2a, 2a') is also configured for transmitting a part of the acquired information to the processing means (10), and wherein the processing means (10) are also configured for verifying the authenticity of said information received from said mobile apparatus (2, 2a, 2a') and for transmitting the result of such verification to said mobile apparatus (2, 2a, 2a').

36. Computer program product which can be loaded into the memory of an electronic apparatus such as a cellular telephone (2), a computer (PC), and the like, **characterized in that** it comprises a portion of software code for implementing the steps of the method according to any one of claims 1 to 16.
